# EUROPEAN PATENT SPECIFICATION

(11) **EP 0 559 832 B1**
(45) Date of publication and mention of the grant of the patent: **03.01.1996**
(21) Application number: 92903249.8
(22) Date of filing: 27.11.1991
(51) Int. Cl.: F16K 49/00, F16K 3/02

(54) **SLIDE VALVE**
SCHIEBER
VANNE A TIROIR

(30) Priority: 28.11.1990 US 619247
(43) Date of publication of application: 15.09.1993
(73) Proprietor: TAPCO INTERNATIONAL, INC., Houston, TX 77041-5619 (US)
(72) Inventor: PURVIS, Howard A., Houston, TX 77024 (US)
(74) Representative: Marles, Alan David
(86) International application number: US9109056
(87) International publication number: WO9209839

(56) References cited:
- US-A- 2 575 464
- US-A- 4 458 879
- US-A- 4 512 363

## Description

### Technical Field

This invention relates generally to a slide control valve for high temperature and/or abrasive service, such as used in oil refineries. More particularly, it relates to an improved valve of this type having a body which includes an outer metal shell which is lined with refractory material.

### Background Art

As described in U.S. Patent No. 3,726,306, slide control valves of this type are generally quite large having internal diameters ranging in size from eighteen inches (18") to eight feet (8'). Due to the services in which they are used, it is often necessary to repair or replace their internal parts including the slide. Obviously, it is desirable that this be done without taking the valve body out of the flow line in which it is installed.

In use the slide of a valve of this type normally occupies a throttling position and is opened or closed depending on the type of valve or service during start up and in the event of an emergency. Since flow through the valve is normally in a vertical direction, the slide must be supported in the valve body; and due to the size of the slide and the impingement of the flow on the slide, which partially closes the valve orifice, this vertical positioning of the valve imposes considerable load on the structure in the valve body on which the slide is supported. Consequently, there is a need to guide the slide as it is moved between its flow controlling positions.

In the aforementioned patent, the side edges of the slide are guidably reciprocable within guides secured to a seat ring or orifice plate on the body of the valve. The slide, guides and orifice plate are preassembled to permit them to be moved as a unit through a side opening in the body of the valve and then secured thereto to dispose the orifice in alignment with the flowway in order to smooth out turbulent flow through the valve. As explained in such patent, this structure not only permits the installation and removal of the internal parts as unit, but also minimizes distortion, binding and wear by maintaining tolerances between the internal parts and the valve body due to thermal and mechanical stress.

In valves of this type where the slide is normally in throttling position, it is not necessary to maintain a tight seal between the slide and the seat surrounding the orifice in the orifice plate. The slide has a T-slot connection with the stem of an actuator mounted on a bonnet removably installed on the body over the side opening whereby the slide is free to shift into tight, load bearing engagement with the downstream guide surfaces.

In valves of this type manufactured and sold by Tapco, a division of Triten Corporation of Houston, Texas, the outer metal body is lined with a refractory material. Alternatively, the valve body may be lined with insulating material and the latter lined with refractory material. This results in a so-called "cold shell" design wherein external body temperatures are minimized.

Although these valves have experienced considerable success, they nevertheless require the fabrication of a large number of internal parts and considerable time and effort involved in assembling and disassembling them for repairs and replacement. The time and the cost involved in fabricating valves such as the type shown in the above-identified patent are significant. These costs are multiplied in the case of valves having larger internal diameters in large part because of the difficulties in maintaining precise tolerances across large diameters. These costs are further increased by valves such as a diverter valve having, for instance, a ninety-six inch (96") inlet diameter and two side-by-side outlets each having an internal diameter of ninety-six inches (96") such that the guides must be at least sixteen feet (16') long plus the distance the outlets are spaced apart.

A device described in U.S. Patent No. 2,575,464 (on which the preamble of the appended claim 1 is based) comprises generally a valve body, having a passageway for passage of a very hot gas stream, freely slideable closure means (disc) disposed in the valve body and arranged to close or partially close the passageway, and externally disposed valve stems adapted to be moved axially inward to adjust the position of the disc, and then be withdrawn away from the disc and out of the hot zone of gases in the passageway. A particular embodiment of this device includes provision of externally arranged rods fastened to the valve stems which cooperate with external adjustable indicators for indicating the position of the closure means within the valve body. The rods impart movement to a block similar to the movement imparted to the disc, thereby indicating the position of the disc within the valve body. Because of the high temperatures this device has to deal with, most of its parts are made of or are lined with refractory material.

The slide of the slide valve disclosed in U.S. Patent No. 2,575,464 is guided and supported solely by refractory material, and the valve stems push the slide without being anchored thereto.

It would be highly desirable and advantageous to provide a valve of this type lined with a refractory material which bears the load so that the wear prone parts can be readily and easily removed, repaired or replaced through the bonnet without disassembling or removing the valve from the flow line. The present invention is directed to such a valve.

### Disclosure of the Invention

According to the present invention there is provided a slide valve for high temperature and/or abrasive service, comprising a body having an outer metal shell and a lining of refractory material securely cast to and supported by the inner surface of the shell to form a flowway therethrough having an inlet and an outlet and a side opening intersecting the flowway intermediate the inlet and outlet, said flowway having grooves formed in its opposite sides with each groove providing upstream and downstream guide surfaces at each side thereof, a slide which is movable through the side opening into and out of positions in which its opposite side edges are received between the guide surfaces of the grooves for guided reciprocation between positions controlling flow through the flowway, an actuator for so reciprocating the slide including a bonnet removably mounted over the side opening and a stem extending sealably through the bonnet and into the side opening, the inner end of said stem and the body of the slide being connected for reciprocating the slide with the stem while permitting limited lateral shifting of the slide with respect to the stem so that it may tightly engage the downstream guide surfaces, said refractory material having sufficiently high compressive strength and securely cast to and supported by the inner surface of the shell sufficiently to carry the load transmitted thereto by the slide, and whereby the side opening has a recess which extends between the downstream side of the grooves and the outlet intermediate the grooves, the recess being of essentially conical shape having its opposite edges intersecting the inner edges of the downstream guide surfaces to permit debris to bypass the slide when in position to throttle flow through the orifice.

Accordingly, it is an object of the present invention to provide a slide control valve for high temperature, abrasive use, such as used in oil refineries, which has wear prone parts readily removable and replaceable through the bonnet without the necessity of removing the valve from the line.

It is yet another object of the present invention to provide such a slide control valve in which the refractory liner bears and supports the load on the slide.

A further object of the present invention is the provision of such a slide control valve which has removable and replaceable wear prone parts, such as inlet and outlet liners, guides and guide assembly, which can be removed and replaced through a removable bonnet on the valve.

A still further object of the present invention is the provision of such a control slide valve which eliminates or reduces erosive bypassing of the slide of the valve.

Other and further objects, features and advantages of the invention are set forth throughout the specification and claims and which are inherent in the invention.

### Brief Description of Drawings

Figure 1 is a vertical sectional view of a slide valve constructed in accordance with the present invention with the slide thereof shown in a throttling position with respect to the orifice.

Figure 2 is a longitudinal-sectional view of the valve as seen along broken lines 2-2 of Figure 1.

Figure 3 is a longitudinal-sectional view of an alternative embodiment of the valve similar to the view of Figure 2.

Figure 4 is a longitudinal-sectional view of an alternative embodiment of the valve similar to Figure 2.

Figure 5 is a longitudinal-sectional view of yet another alternative embodiment of the valve similar to Figure 2.

Figure 6 is a cross-sectional view of a diverter valve constructed in accordance with the present invention with the slide thereof shown in a position closing one of the two outlets thereof.

Figure 7 is a longitudinal-sectional view of the valve as seen along broken lines 7-7 of Figure 6.

### Best Modes for Carrying out the Invention

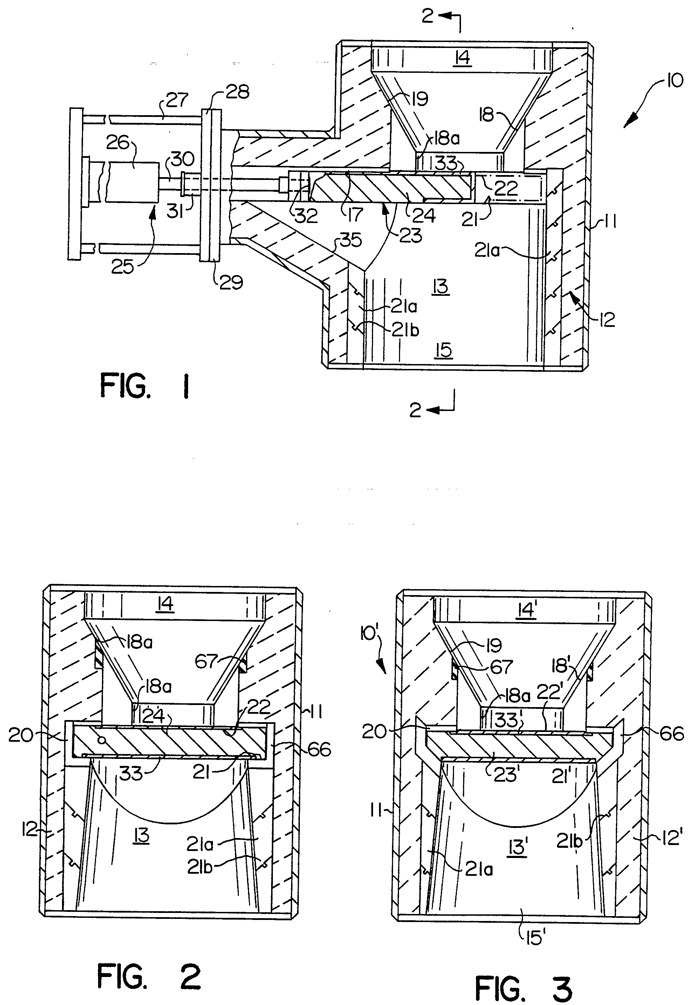

With reference to Figures 1 and 2 of the above described drawings, the overall valve, which is indicated in its entirety by reference character 10, is shown to comprise an outer metal shell 11 and a lining 12 of refractory material which has been cast in place and thus secured on the inner surface of the shell to form a flowway 13 therethrough. A metal mesh, not shown, is secured to the inner surface of the metal shell 11, such as by welding, and the refractory material is cast in place through the metal mesh and then shaped, such as by troweling to form the flowway 13. With the valve disposed on its side, the flowway 13 is arranged vertically and includes an inlet 14 at its upper end, an outlet 15 at its lower end, and a side opening 17 therein which intersects the flowway 13 intermediate the inlet 14 and outlet 15. As previously described, in valves of this type, the inlet is typically connected to a process flowline (not shown) and the outlet is typically connected to the downstream flow line. More particularly, the cast refractory lining 12 forming the inlet has a conical surface 18 which converges from its upper end toward an orifice 19 at its intersection with the side opening. By casting the refractory lining 12 in place, it is capable of withstanding the load through the valve.

As best shown in Figure 2, the flowway 13 has grooves 20 formed in its opposite sides with each groove providing a downstream guide surface 21 at each side and an upstream guide surface 22 on either side. More particularly, the valve also includes a slide indicated in its entirety by reference character 23 and including a solid metal body 24 which is of such size as to be movable through the side opening 17 into and out of positions in which its opposite side edges are received between the guide surfaces of the grooves for guided reciprocation between positions controlling flow through the flowway. The slide 23 is of a thickness somewhat less than the width of the cavity intermediate the guide surfaces 21 and 22, and of a width somewhat less than the distance between the end surfaces of the grooves.

As previously described, in a valve of this type, the slide normally occupies a position in which it throttles flow through the orifice 19. That is, as shown in Figure 1, its leading edge is disposed generally intermediate the sides of the orifice 19. As shown in broken lines in Figure 1, the slide may be moved further into the valve body and thus in a rightward direction to a fully closed position in an emergency. On the other hand, when it is necessary to fully open the valve, as may occur during start up, the slide may be moved in a leftward direction and thus toward a position more removed from the valve body to dispose its leading edge outwardly of the orifice 19.

The slide is reciprocated between these positions by means of an actuator which is indicated in its entirety in Figure 1 by reference character 25 and includes a cylinder 26 mounted on a framework 27 having a bonnet flange 28 on one end adapted to be bolted to and thus releasably mounted on a flange 29 formed on the left-hand end of the metal shell 11 of the valve body. The bonnet flange has an opening therethrough forming a continuation of the outer end of the side opening formed in the refractory lining of the valve body, which openings are of a size to permit the slide to move therethrough during assembly and disassembly.

The actuator also includes a piston (not shown) within the cylinder and having a stem 30 which extends sealably through a stuffing box 31 on the bonnet flange and thus into the side opening in the valve body. As indicated by a broken away portion of Figure 1, the inner end of the stem is connected to the opposite end of the slide by means of a T-slot 32 which enables the slide to be reciprocated with the stem while permitting the slide to shift laterally with respect thereto. Thus, with the slide 23 positioned in the valve body as shown, it is free to move laterally so that its downstream side may tightly engage the downstream guide surfaces 21 of the grooves.

More particularly, and as previously described, the refractory lining 12 is securely cast in place in the metal shell 11 and formed of a material which has sufficiently high compressive strength to enable the guide surface 21 to carry the load transmitted thereto by the slide 23. The load transmitted to guide surfaces 21 includes both the weight of slide 23 and the load on slide 23 resulting from impingement of the process flow on the upstream surface of slide 23, and to assist in bearing this load, the alternative embodiments shown in Figures 3-5, in which like structure is designated by a "primed" reference character, may be utilized to advantage.

In the case of the embodiment shown in Figure 3, a portion of the load transmitted to downstream guide surfaces 21' is transferred to the shell 11' by the angling of guide surfaces 21' inwardly toward the flowway 13'. The inward angling of guide surfaces 21' in this manner introduces a radially outward component into the load transmitted by slide 23' to guide surface 21' whereby a portion of the load is born by the shell 11'. Likewise, the load transmitted to the angled downstream guide surfaces 21' of the embodiment shown in Figure 5 is transferred to the shell 11'.

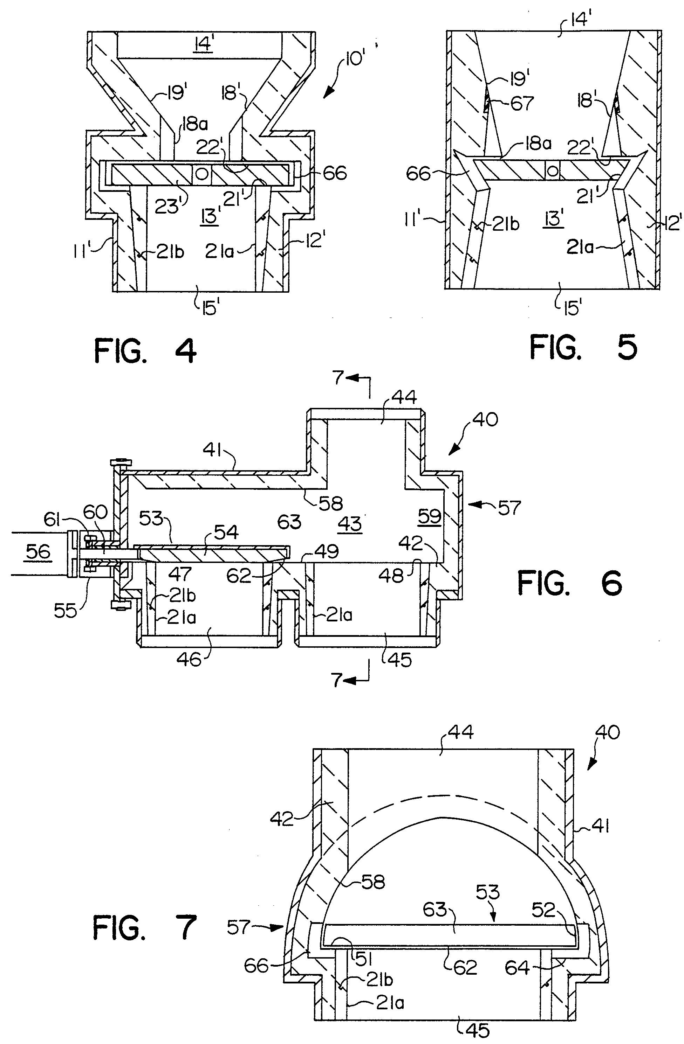

Referring now to the embodiment shown in Figure 4, the transfer of the load of the shell 11' is accomplished by positioning a portion of the shell 11' downstream of slide 23' opposite the outer side edges of slide 23'. This embodiment shown in Figure 4 is of particular utility in very high pressure applications and for applications in which inlet size is much larger than the diameter of orifice 19'; the embodiment shown in Figure 5 is preferred for use in lower pressure applications and/or in applications calling for an inlet size which is closer in diameter to the diameter of the orifice.

Because the type of valve shown in Figures 1-5 is normally used for throttling purposes, it is not necessary that it maintain a tight seal between the upstream side of the slide and the upstream guide surface 22 about the orifice. Hence, it is possible to permit this lateral movement between the slide and the stem so as to transmit the load to the downstream of the refractory lining, while retaining the necessary tolerances between the slide and the lining to facilitate reciprocable movement of the slide. However, one of the advantages of the structure of the valve of the type shown in Figures 3 and 5 in which the downstream guide surfaces are angled inwardly toward the flowway is that such valves can be used to seal the flowway against passage of a process flow therethrough.

In the preferred and illustrated embodiments of the invention, the slide 23 also includes a layer 33 of heat and erosion resistant material on the upstream side of the metal body 24. A suitable material for this purpose is known as the hexmesh and may be applied to the upstream side of the metal body in any suitable manner as is known in the art.

As also shown in Figure 1, the side opening 13 in the refractory lining has a recess 35 formed therein which extends between the downstream side of the slide 23 and the outlet 15 from the valve body intermediate the grooves 20. This recess thus permits debris which would otherwise accumulate within the cavity to the left of the slide, as shown in Figure 1, to bypass the slide. As shown, the recess 35 is of essentially conical shape having its opposite end edges intersecting the inner edges of the downstream guide surfaces 21.

Referring now to Figures 6 and 7, there is shown a diverter valve, indicated in its entirety by reference character 40, constructed in accordance with the present invention. Diverter valve 40 is shown to comprise an outer metal shell 41 and a lining 42 of refractory material which has been cast in place on the inner surface of the shell to form a flowway 43 therethrough. Thus, with the valve disposed as shown in Figures 6 and 7, the flowway 43 is arranged vertically and includes an inlet 44 at its upper end, a primary outlet 45, another, secondary outlet 46 to the side of the primary outlet 45 at the lower end thereof, and a side opening 47 which intersects the flowway 43 intermediate the inlet 44 and primary outlet 45, but with another line connected to secondary outlet 45 for diverting the process flow into the other line. The cast lining 12 forming the inlet is shown as a straight line, but could also be cast in the conical configuration of, for instance, the inlet 14 of the valve 10 of Figure 1.

As best shown in Figure 7, the flowway 13 is provided with downstream guide surfaces 51 formed in the lining 42 of opposite sides thereof in a manner similar to the construction of the valve 10' shown in Figure 4 in which a portion of the shell 41 downstream of the slide 53 positioned therein is opposite the outer side edges of slide 53 for transferring the load of slide 53 thereto by the refractory lining 42. The upstream guide surfaces 52 are formed by the inside curved surface 58 of the lining 42 of the body 57 of valve 40, the side edges of side 53 being radiused to approximate the radius of that surface 58. Slide 53 includes a metal body 54 which is of such size as to be movable through the side opening 47 into and out of positions in which its opposite side edges are received between the guide surfaces 51 and 52 for guided reciprocation between positions controlling flow through flowway 43. More particularly, and as best shown in Figure 7, the width of slide 53 is somewhat less than the distance between the end surfaces of the inside surface 56 of the lining 42 of the body 57.

In a valve such as the diverter valve 40, the slide normally occupies a position in which it controls flow out of primary outlet 45. That is, as shown in Figure 6, its end edge is disposed generally intermediate the two outlets 45 and 46, e.g., resting on or covering the portion 49 of the refractory lining 42 between outlets 45 and 46 as well as on the downstream guide surface 51. The slide is moved further into the valve body 57, and thus in a rightward direction, to close the primary outlet 45 and divert the process flow into secondary outlet 46. The slide is reciprocated between these positions by means of an actuator which is indicated in its entirety in Figure 6 by reference character 55 and includes a cylinder 56 mounted on a framework and bonnet flange (not shown) preferably having the same or a similar construction as shown in Figure 1. The actuator 55 also includes a piston (not shown) within the cylinder 56 having a stem 60 which extends sealably through a stuffing box 61 on the bonnet flange and thus into the side opening in the valve body 57. Stem 60 is connected to slide 53 by means of a T-slot (not shown) which enables the slide to be reciprocated with the stem while permitting the slide to shift laterally with respect thereto. Thus, with the slide 53 positioned in the valve body 57 as shown, it is free to move laterally so that its downstream side may tightly engage the downstream guide surfaces 51.

The construction of diverter valve 40 confers a number of advantages upon the valve of the present invention over previous known diverter valves. In addition to the elimination of the metal guides and the problems encountered in fabricating and assembling them into the valve body to precise tolerances, such valves are characterized by operational difficulties arising from this construction. For instance, the flow through the primary outlet may be at a nominal 1400°F while the "cold" secondary outlet may be several hundred degrees cooler than that temperature. The coefficients of thermal contraction and expansion of the refractory are different than those of the metal guides, and the coefficients of the guides may be different than those of the slide, such that maintaining specified clearances in the face of this temperature differential is problematical. This difficulty is increased by the fact that the amount of mounting hardware required for the metal guides is such that the two outlets 45 and 46 must be spaced far enough apart to allow the mounting of the guides, thereby increasing the temperature differential (and coincidentally the overall size and weight of the valve adding to its cost).

By contrast, the guide surfaces 51 and 52 of the diverter valve 40 are all formed in the refractory material, and that material has the same coefficient of thermal contraction and expansion throughout the entire valve body, minimizing thermally induced misalignment problems. Further, the two outlets are closely spaced (a matter of inches rather than perhaps as much as a foot or more), decreasing the overall temperature differential from hot to cold outlet, and coincidentally, overall size and weight. Additional savings in size and weight result from the fact that the body, when viewed in the sectional view shown in Figure 7, need not be wide enough to accommodate the guides in the space between the inside surface 58 of lining 42 of body 47 and slide 53. To further minimize alignment problems, both leading and trailing edges of the slide 53 are preferably beveled as shown at reference character 62 to allow the slide 53 to plane up over the edge 48 of the refractory lining forming the primary outlet 45 or any irregularities in the lining forming downstream guide surfaces 51 or the portion 49 below primary and secondary outlets 45 and 46. Such irregularities may result, for instance, in the portion 49 of lining 42 between outlets 45 and 46 as a result of impingement of the process flow thereon or as a result of the cracking of the lining resulting from the above-described temperature differential from hot to cold sides of valve 40. In applications in which such impingement or cracking is problematical, the front to back dimension of slide 53 (and the portion of the body 57 indicated by reference character 59 which receives the leading, or front, edge of slide 53 when slide 53 is moved rightwardly in Figure 6) is increased so that the slide 53 covers the portion 49 completely when blocking secondary outlet 46. The radius of the upstream guide surfaces 52 and the weight and load on slide 53 provides the necessary resistance to any upward movement of slide 53 caused by any such irregularities in the portion 49 or guide surfaces 51 such that alignment problems in the vertical dimension are minimized as well. To counteract side-to-side alignment problems, the outside edges of slide 53 are also beveled as shown at reference character 64 such that slide 53 tends to be self-centering as it is reciprocated within body 57.

Refractory material having sufficiently high compressive strength so as to be suitable for carrying the load transmitted by slide 23 is available from a number of suppliers, including Harbison Walker (Pittsburgh, Pennsylvania), National Refractories (Oakland, California), Norton Co. (Worchester, Massachusetts), The Carborundum Co. (Niagara Falls, New York), Resco Products, Inc. (Morristown, Pennsylvania), Plibrico (Chicago, Illinois), and A.P. Green (Mexico, Missouri). In a presently preferred embodiment, an abrasion resistant alumina-zirconia-silica composite sold under the trademark AR-400® by Premier Refractories and Chemicals, Inc. (King of Prussia, Pennsylvania) is modified as described below and cast in the shell using conventional techniques known in the industry to serve as the refractory lining. However, any such refractory material having a modulus of rupture (MOR) over about 1200 psi at normal operating temperatures (about 1400 to about 1900 psi is preferred) is suitable for use in accordance with the present invention, and many commercially available composites can either be modified by adding alumunina and/or zirconia to increase MOR or, by varying such parameters as aggregate size, cooling rate, pressure, percentage solids, vibration frequency, all as are known in the art, to minimize the strength thereof for use in accordance with the present invention.

Another consideration, especially in larger diameter valves, in selecting a suitable refractory composite is resistance to shear. For example, referring to Figures 2, 3, and 5, the construction of the valve shown therein is such that the slide 23 is supported by a relatively unsupported, relatively large mass (especially in large diameter valves) of refractory material located immediately below, or downstream, of the downstream guide surfaces 21. The load transmitted into the refractory lining by slide 23, even with the transfer of a portion of that load to the shell 11, introduces a shear force into that portion of the refractory lining 42 such that the composition, method of application, and other variables of the preferred lining are preferably manipulated, again as known in the art, to optimize the resistance of the lining to such shear forces. In particularly demanding applications, composite devices such as rods, columns, pyramids, or other re-enforcing structure comprised of steel or other ceramic or composite materials may be affixed to the shell 11 or cast in the lining 12 to impart the necessary degree of shear resistance to the portion of the lining immediately downstream of the downstream guide surfaces 21.

In particularly demanding applications, additional load bearing capability can be achieved by adjusting the dimensions of the downstream guide surfaces 21 (or 51 in Figures 6 and 7) and slide, relative to the orifice diameter, so as to increase the surface area of the refractory material to which the load of the slide and process flow is transmitted. In other words, by increasing the width of the slide and the depth of the grooves in the refractory lining 12 (or 52 in Figures 6 and 7) which form the guide surfaces (subject to the requirement that a minimum thickness of lining be retained between flowway and shell so as to provide the necessary thermal resistance capabilities), the load is spread over a larger surface area, effectively increasing the compressive and shear strength of the lining.

As noted above, suitable composites may be cast in place, and that capability illustrates another significant cost saving advantage of the present invention. In particular, the ability to cast the guide surfaces 21 and 22 (or 51 and 52 in Figures 5 and 6) in place eliminates the requirements that the prior art metal guides of valves such as are shown in the above-mentioned U.S. Patent No. 3,726,306 be ground to precise specifications because no grinding of the guide surfaces is required. Additional savings and precision can be achieved in some applications by actually using the appropriate slide as a portion of the framework for casting the lining.

Although the refractory lining is illustrated to have been cast in one piece to the inner surfaces of the metal body, it may be cast in sections. As shown, the metal shell comprises separate sections welded to one another, including a cylindrical section through which the flowway is formed and lateral sections surrounding the portion of the refractory lining which forms the side opening from the flowway. The metal shell is of sufficient size and strength to provide a form to which the refractory lining may be cast.

Further embodiments of the invention are the inclusion of replaceable wear prone parts. In general, these include wear prone portions or segments of the inlet and outlet liners, and a replaceable guide assembly. These may consist of single or multipart members and the liner portions may be threaded, keyed or otherwise releasably secured in place. Advantageously, the slide or disk functions as a locking mechanism to align and lock the guides, guide assembly, and inlet and outlet liners in place.

More specifically, and referring now to Figure 1, releasable inlet liner insert 18a and releasable outlet liner 21a are threaded, keyed or otherwise releasably secured to the liner 12. As illustrated, the inserts may be a single member 21a or a multipart member 21a with the parts keyed together. The tapers 21b between the parts limit, reduce or eliminate erosive bypassing.

Similarly, in Figures 2, 3, 4, 5, 6 and 7 replaceable inlet and outlet liner inserts 18a and 21a are shown in place and are releasable and replaceable through the bonnet. The inserts may be tapered as desired and as illustrated in Figure 5.

As illustrated in Figures 2, 3, 4, 5, and 7, removable and replaceable guide assembly or guides 66 may be provided. These may take a variety of shapes, as illustrated in these drawings, and, if desired, the guides are keyed (not shown) to the refractory material. The valve slide or disc 53 functions as a locking mechanism to align and lock the liner inserts and the guide assembly or guides 66 in place.

Thus, the wear prone parts are readily removable and replaceable through the bonnet without having to remove the valve from the line.

As illustrated in Figures 2, 3 and 5, a cast refractory seal 67 may be used to seal the lining inserts 18a and 21a with the liner 12.

The present invention, therefore, is well suited and adapted to attain the objects and ends and has the features mentioned as well as others inherent therein.

While presently preferred embodiments have been given for purpose of disclosure, changes can be made therein which are within the scope of the invention as defined by the appended claims.

## Claims

1. A slide valve for high temperature and/or abrasive service, comprising
a body having an outer metal shell (11) and a lining (12) of refractory material securely cast to and supported by the inner surface of the shell (11) to form a flowway (13) therethrough having an inlet (14) and an outlet (15) and a side opening (17) intersecting the flowway (13) intermediate the inlet (14) and outlet (15),
said flowway (13) having grooves (20) formed in its opposite sides with each groove (20) providing upstream (22) and downstream (21) guide surfaces at each side thereof,
a slide (23) which is movable through the side opening (17) into and out of positions in which its opposite side edges are received between the guide surfaces of the grooves for guided reciprocation between positions controlling flow through the flowway (13),
an actuator (25) for so reciprocating the slide (23) including a bonnet (28) removably mounted over the side opening (17) and a stem (30) extending sealably through the bonnet (28) and into the side opening,
the inner end of said stem (30) and the body of the slide (23) being engaged for reciprocating the slide (23) with the stem (30) while permitting limited lateral shifting of the slide (23) with respect to the stem (30) so that it may tightly engage the downstream (21) guide surfaces,
said refractory material (12) having sufficiently high compressive strength and securely cast to and supported by the inner surface of the shell (11) sufficiently to carry the load transmitted thereto by the slide (23), characterised in that the inner end of said stem (30) is connected to the body of the slide, and in that
the side opening (17) has a recess (35) which extends between the downstream (21) side of the grooves (20) and the outlet (15) intermediate the grooves (20), the recess (35) being of essentially conical shape having its opposite end edges intersecting the inner edges of the downstream (21) guide surfaces to permit debris to bypass the slide (23) when in position to throttle flow through the orifice (19).

2. A slide valves as claimed in claim 1, characterised in that,
the slide (23) includes a layer (33) of heat and abrasion resistant material on the upstream (22) side of a metal body (24).

3. A slide valve as claimed in claim 1, characterised in that,
the downstream (21) guide surfaces of the grooves (20) are angled inwardly toward the flowway (13) for transferring a portion of the load transmitted to said refractory material to the outer metal shell (11).

4. A slide valve as claimed in claim 1, characterised in that,
said body flowway (13) has another outlet (46) to the side of the first mentioned outlet (15), and
the slide (23) is reciprocated by the actuator (25) between positions controlling flow
through one or the other of the outlets (15,46).

5. A slide valve as claimed in claim 1, characterised in that,
the upstream (22) guide surfaces of the groove (20) taper from the flowway (13) toward the outer edges of the downstream (21) guide surface.

6. A slide valve as claimed in claim 1, characterised in that,
the metal shell (11) of a portion of the body downstream (21) of the slide (23) is opposite the outer side edges of the slide (23) so that the load of the slide (23) is transferred thereto by the refractory lining (12).

7. A slide valve as claimed in claim 1, characterised in that,
the inlet (14) of the flowway (13) includes at least one lining insert (18a, 21a) of refractory material removably secured to the lining (12) of refractory material adjacent the upstream groove (20),
the lining insert (18a, 21a) being removable and replaceable through the bonnet (28).

8. A slide valve as claimed in claim 1, characterised in that,
the outlet (15) of the flowway (13) includes at least one lining insert (18a, 21a) of refractory material removably secured to the lining (12) of refractory material adjacent the downstream groove (20),
the lining insert (18a, 21a) being removable and replaceable through the bonnet (28).

9. A slide valve as claimed in claim 1, characterised in that,
the inlet (14) and the outlet (15) of the flowway (13) includes at least one lining insert (18a, 21a) of refractory material removably secured to the lining (12) of refractory material adjacent the upstream and downstream grooves (20), and the lining insert (18a, 21a) being removable and replaceable through the bonnet (28).

10. A slide valve as claimed in claim 1, characterised in that,
the flowway (13) includes a plurality of lining inserts (18a, 21a) of refractory material removably secured to the lining (12) of refractory material adjacent the upstream and downstream grooves (20),
adjacent lining inserts (18a, 21a) having interfitting portions on their abutting surfaces,
the inserts (18a, 21a) being removable and replaceable through the bonnet (28).

11. A slide valve as claimed in claim 2, characterised in that,
at least the downstream (21) guide surfaces of the grooves. (20) comprise removable and replaceable guide surfaces through the bonnet (28).

12. A slide valve as claimed in claim 1, characterised in that,
The flowway (13) includes a plurality of lining inserts (18a, 21a) of refractory material removably secured to the lining (12) of refractory material adjacent the upstream and downstream grooves (20),
adjacent lining inserts (18a, 21a) having interfitting portions on their abutting surfaces, and
at least the downstream (21) guide surfaces of the grooves (20) comprise removable and replaceable guides,
the lining inserts (18a, 21a) and the guides being replaceable through the bonnet (28),
the slide (53) locking and aligning the lining inserts (18a, 21a) and guides in place.

## Patentansprüche

1. Schieberventil für den Einsatz bei hohen Temperaturen und/oder abrasivem Verschleiß, das folgendes aufweist:
einen Körper mit einem äußeren Metallmantel (11) und einem Futter (12) aus Feuerfestmaterial, das fest auf die innere Oberfläche des Mantels (11) gegossen ist und davon gehalten wird, um eine Durchflußbahn (13) durch das Gehäuse zu bilden, die einen Einlaß (14) und einen Auslaß (15) und eine seitliche Öffnung (17) hat, die die Durchflußbahn (13) zwischen dem Einlaß (14) und dem Auslaß (15) schneidet,
wobei die Durchflußbahn (13) Nuten (20) hat, die in ihren gegenüberliegenden Seiten ausgebildet sind, wobei jede Nut (20) aufstromseitige (22) und abstromseitige (21) Leitflächen an jeder Seite davon bildet,
einen Schieber (23), der durch die seitliche Öffnung (17) in und aus Positionen bewegbar ist, in denen seine entgegengesetzten Seitenränder zwischen den Leitflächen der Nuten aufnehmbar sind zur geführten Hin- und Herbewegung zwischen Positionen, die den Durchfluß durch die Durchflußbahn steuern,
eine Betätigungseinheit (25), um den Schieber (23) hinund herzubewegen, wobei die Betätigungseinheit eine Haube (28), die über der seitlichen Öffnung (17) abnehmbar angebracht ist, und einen Schaft (30) hat, der abdichtend durch die Haube (28) und in die seitliche Öffnung verläuft,
wobei das innere Ende des Schafts (30) und der Körper des Schiebers (23) in Eingriff sind, um den Schieber (23) mit dem Schaft (30) hin- und herzubewegen, während gleichzeitig eine begrenzte Querverlagerung des Schiebers (23) in bezug auf den Schaft (30) zugelassen wird, so daß er mit den abstromseitigen (21) Leitflächen in dichten Eingriff gelangen kann,
wobei das Feuerfestmaterial (12) ausreichend hohe Druckfestigkeit hat und ausreichend fest auf die innere Oberfläche des Gehäuses (11) gegossen ist und davon gehalten wird, um die durch den Schieber (23) darauf übertragene Last aufzunehmen, dadurch gekennzeichnet, daß
das innere Ende des Schafts (30) mit dem Körper des Schiebers verbunden ist, und
daß die seitliche Öffnung (17) eine Aushöhlung (35) hat, die zwischen der abstromseitigen (21) Seite der Nuten (20) und dem Auslaß (15) zwischen den Nuten (20) verläuft, wobei die Aushöhlung (35) im wesentlichen konische Gestalt hat und ihre entgegengesetzten Endränder die inneren Ränder der abstromseitigen (21) Leitflächen schneiden, um zuzulassen, daß Abrieb- bzw. Verschleißteilchen den Schieber (23) umgehen, wenn er in einer Position ist, um den Durchfluß durch die Öffnung (19) zu drosseln.

2. Schieberventil nach Anspruch 1, dadurch gekennzeichnet, daß
der Schieber (23) eine Schicht (33) aus hitze- und abriebfestem Material an der Aufstromseite (22) eines Metallkörpers (24) aufweist.

3. Schieberventil nach Anspruch 1, dadurch gekennzeichnet, daß
die abstromseitigen (21) Leitflächen der Nuten (20) nach innen in Richtung zu der Durchflußbahn (13) abgewinkelt sind, um einen Teil der auf das Feuerfestmaterial übertragenen Last auf das äußere Metallgehäuse (11) zu übertragen.

4. Schieberventil nach Anspruch 1, dadurch gekennzeichnet, daß
die Durchflußbahn (13) des Körpers einen anderen Auslaß (46) zu der Seite des erstgenannten Auslasses (15) hat und
der Schieber (23) von der Betätigungseinheit (25) zwischen Positionen hin- und herbewegt wird, um den Durchfluß
durch den einen oder den anderen der Auslässe (15, 46) zu steuern.

5. Schieberventil nach Anspruch 1, dadurch gekennzeichnet, daß
die aufstromseitigen (22) Leitflächen der Nut (20) von der Durchflußbahn (13) zu den äußeren Rändern der abstromseitigen (21) Leitfläche verjüngt sind.

6. Schieberventil nach Anspruch 1, dadurch gekennzeichnet, daß
der Metallmantel (11) eines Bereichs des Körpers abstromseitig (21) von dem Schieber (23) den äußeren Seitenrändern des Schiebers (23) gegenüberliegt, so daß die Last des Schiebers (23) von dem Feuerfestfutter (12) darauf übertragen wird.

7. Schieberventil nach Anspruch 1, dadurch gekennzeichnet, daß
der Einlaß (14) der Durchflußbahn (13) wenigstens einen Futtereinsatz (18a, 21a) aus Feuerfestmaterial aufweist, der an dem Futter (12) aus Feuerfestmaterial benachbart der abstromseitigen Nut (20) abnehmbar befestigt ist,
wobei der Futtereinsastz (18a, 21a) durch die Haube (28) hindurch abnehmbar und austauschbar ist.

8. Schieberventil nach Anspruch 1, dadurch gekennzeichnet, daß
der Auslaß (15) der Durchflußbahn (13) wenigstens einen Futtereinsatz (18a, 21a) aus Feuerfestmaterial aufweist, der an dem Futter (12) aus Feuerfestmaterial benachbart der abstromseitigen Nut (20) abnehmbar befestigt ist,
wobei der Futtereinsatz (18a, 21a) durch die Haube (28) hindurch abnehmbar und austauschbar ist.

9. Schieberventil nach Anspruch 1, dadurch gekennzeichnet, daß
der Einlaß (14) und der Auslaß (15) der Durchflußbahn (13) wenigstens einen Futtereinsatz (18a, 21a) aus Feuerfestmaterial haben, der an dem Futter (12) aus Feuerfestmaterial den aufstromseitigen und abstromseitigen Nuten (20) benachbart abnehmbar befestigt ist, und der Futtereinsatz (18a, 21a) durch die Haube (28) hindurch abnehmbar und austauschbar ist.

10. Schieberventil nach Anspruch 1, dadurch gekennzeichnet, daß
die Durchflußbahn (13) eine Vielzahl von Futtereinsätzen (18a, 21a) aus Feuerfestmaterial aufweist, die den aufstromseitigen und abstromseitigen Nuten (20) benachbart abnehmbar an dem Futter (12) aus Feuerfestmaterial befestigt sind,
einander benachbarte Futtereinsätze (18a, 21) ineinanderfügbare Bereiche an ihren aneinanderstoßenden Oberflächen haben,
die Einsätze (18a, 21a) durch die Haube (28) hindurch abnehmbar und austauschbar sind.

11. Schieberventil nach Anspruch 2, dadurch gekennzeichnet, daß
wenigstens die abstromseitigen (21) Leitflächen der Nuten (20) abnehmbare und austauschbare Leitflächen durch die Haube (28) aufweisen.

12. Schieberventil nach Anspruch 1, dadurch gekennzeichnet, daß
die Durchflußbahn (13) eine Vielzahl von Futtereinsätzen (18a, 21a) aus Feuerfestmaterial aufweist, die an dem Futter (12) aus Feuerfestmaterial benachbart den aufstromseitigen und abstromseitigen Nuten (20) abnehmbar befestigt sind,
benachbarte Futtereinsätze (18a, 21a) an ihren aneinanderstoßenden Oberflächen ineinanderfügbare Bereiche haben, und
wenigstens die abstromseitigen (21) Leitflächen der Nuten (20) abnehmbare und austauschbare Führungen aufweisen,
wobei die Futtereinsätze (18a, 21a) und die Führungen durch die Haube (28) hindurch austauschbar sind und
wobei der Schieber (53) die Futtereinsätze (18a, 21a) und die Führungen in ihren Lagen festlegt und ausfluchtet.

## Revendications

1. Valve à tiroir pour service à température élevée et/ou avec agents abrasifs, comprenant
un corps ayant une enveloppe métallique extérieure (11) et une doublure (12) de matériau réfractaire solidement coulée à la surface intérieure de l'enveloppe extérieure (11) et supportée par celle-ci pour former un conduit d'écoulement (13) la traversant, ayant une entrée (14) et une sortie (15) et une ouverture latérale (17) coupant le conduit d'écoulement (13) entre l'entrée (14) et la sortie (15),
ledit conduit d'écoulement (13) ayant des rainures (20) formées dans ses côtés opposés, chaque rainure (20) constituant des surfaces de guidage amont (22) et aval (21) de chaque côté de celle-ci,
un tiroir (23) qui peut se déplacer à travers l'ouverture latérale (17) pour prendre et quitter des positions dans lesquelles ses bords latéraux opposés sont reçus entre les surfaces de guidage des rainures pour assurer le mouvement alternatif guidé entre des positions commandant le débit dans le conduit d'écoulement (13),
un actionneur (25) pour commander le mouvement alternatif du tiroir (23) comprenant un chapeau (28) monté de manière amovible par-dessus l'ouverture latérale (17) et une tige (30) traversant le chapeau (28) par un joint étanche et entrant dans l'ouverture latérale,
l'extrémité intérieure de ladite tige (30) et le corps du tiroir (23) étant engagés pour faire déplacer le tiroir (23) en mouvement alternatif avec la tige (30) tout en permettant un déplacement latéral limité du tiroir (23) par rapport à la tige (30) de telle sorte qu'il puisse s'engager étroitement avec les surfaces de guidage aval (21),
ledit matériau réfractaire (12) ayant une résistance à la compression suffisamment élevée et étant coulé fermement à la surface intérieure de l'enveloppe (11) et supportée par elle suffisamment pour porter la charge qui lui est transmise par le tiroir (23), caractérisée en ce que l'extrémité intérieure de ladite tige (30) est reliée au corps du tiroir, et en ce que
l'ouverture latérale (17) a un évidement (35) qui s'étend entre le côté aval (21) des rainures (20) et la sortie (15) entre les rainures (20), l'évidement (35) étant de forme essentiellement conique dont les bords d'extrémités opposées coupent les bords intérieurs des surfaces de guidage aval (21) pour permettre aux débris d'éviter le tiroir (23) lorsqu'il est en position pour limiter le débit à travers l'orifice (19).

2. Valve à tiroir selon la revendication 1, caractérisée en ce que
le tiroir (23) comprend une couche (33) de matériau résistant à la chaleur et à l'abrasion du côté amont (22) d'un corps métallique (24).

3. Valve à tiroir selon la revendication 1, caractérisée en ce que
les surfaces de guidage aval (21) des rainures (20) sont inclinées vers l'intérieur en direction du conduit d'écoulement (13) pour transférer une partie de la charge transmise audit matériau réfractaire à l'enveloppe métallique extérieure (11).

4. Valve à tiroir selon la revendication 1, caractérisée en ce que
ledit conduit d'écoulement (13) du corps a une autre sortie (46) vers le côté de la première sortie mentionnée (15), et
le tiroir (23) est déplacé en mouvement alternatif par l'actionneur (25) entre des positions réglant le débit par l'une ou l'autre des sorties (15,46).

5. Valve à tiroir selon la revendication 1, caractérisée en ce que
les surfaces de guidage amont (22) de la rainure (20) ont une forme conique allant du conduit d'écoulement (13) vers les bords extérieurs de la surface de guidage aval (21).

6. Valve à tiroir selon la revendication 1, caractérisée en ce que
l'enveloppe métallique (11) d'une partie du corps en aval (21) du tiroir (23) est opposée aux bords latéraux extérieurs du tiroir (23) de sorte que la charge du tiroir (23) lui soit transférée par la doublure réfractaire (12).

7. Valve à tiroir selon la revendication 1, caractérisée en ce que
l'entrée (14) du conduit d'écoulement (13) comprend au moins une doublure rapportée (18a, 21a) de matériau réfractaire fixée de manière amovible à la doublure (12) de matériau réfractaire à proximité immédiate à la rainure amont (20),
la doublure rapportée (18a, 21a) étant amovible et remplaçable à travers le chapeau (28).

8. Valve à tiroir selon la revendication 1, caractérisée en ce que
la sortie (15) du conduit d'écoulement (13) comprend au moins une doublure rapportée (18a, 21a) de matériau réfractaire fixée de manière amovible à la doublure (12) de matériau réfractaire à proximité immédiate de la rainure aval (20),
la doublure rapportée (18a, 21a) étant amovible et remplaçable à travers le chapeau (28).

9. Valve à tiroir selon la revendication 1, caractérisée en ce que
l'entrée (14) et la sortie (15) du conduit d'écoulement (13) comprennent au moins une doublure rapportée (18a, 21a) de matériau réfractaire fixée de manière amovible à la doublure (12) de matériau réfractaire à proximité immédiate des rainures amont et aval (20), et la doublure rapportée (18a, 21a) étant amovible et remplaçable à travers le chapeau (28).

10. Valve à tiroir selon la revendication 1, caractérisée en ce que
le conduit d'écoulement (13) comprend une pluralité de doublures rapportées (18a, 21a) de matériau réfractaire fixées de manière amovible à la doublure (12) de matériau réfractaire à proximité immédiate des rainures amont et aval (20),
les doublures rapportées adjacentes (18a, 21a) ayant des parties d'emboîtement sur leurs surfaces d'aboutement,
les doublures rapportées (18a, 21a) étant amovibles et remplaçables à travers le chapeau (28).

11. Valve à tiroir selon la revendication 2, caractérisée en ce que
au moins les surfaces de guidage aval (21) des rainures (20) comprennent des surfaces de guidage amovibles et remplaçables à travers le chapeau (28).

12. Valve à tiroir selon la revendication 1, caractérisée en ce que
le conduit d'écoulement (13) comprend une pluralité de doublures rapportées (18a, 21a) de matériau réfractaire fixées de manière amovible à la doublure (12) de matériau réfractaire à proximité immédiate des rainures amont et aval (20),
les doublures rapportées adjacentes (18a, 21a) ayant des parties d'emboîtement sur leurs surfaces d'aboutement, et
au moins les surfaces de guidage aval (21) des rainures (20) comprennent des guides amovibles et remplaçables,
les doublures rapportées (18a, 21a) et les guides étant remplaçables à travers le chapeau (28),
le tiroir (53) verrouillant et alignant les doublures rapportées (18a, 21a) et les guides en position.
